# EUROPÄISCHE PATENTSCHRIFT

(11) **EP 0 837 753 B1**
(45) Veröffentlichungstag und Bekanntmachung des Hinweises auf die Patenterteilung: **31.10.2001**
(21) Anmeldenummer: 96914037.5
(22) Anmeldetag: 04.06.1996
(51) Int. Cl.: B23Q 1/54, B23Q 5/04

(54) **WERKZEUGHALTER**
TOOLHOLDER
DISPOSITIF PORTE-OUTIL

(30) Priorität: 11.07.1995 CH 203495
(43) Veröffentlichungstag der Anmeldung: 29.04.1998
(73) Patentinhaber: GAFNER, Rudolf, CH-5054 Kirchleerau (CH)
(72) Erfinder: GAFNER, Rudolf, CH-5054 Kirchleerau (CH)
(74) Vertreter: Patentanwälte Feldmann & Partner AG
(86) Internationale Anmeldenummer: CH9600209
(87) Internationale Veröffentlichungsnummer: WO9702922

(56) Entgegenhaltungen:
- CH-A- 682 891
- GB-A- 2 246 088
- US-A- 4 548 532
- PATENT ABSTRACTS OF JAPAN vol. 018, no. 633 (M-1714), 2.Dezember 1994 & JP,A,06 246519 (NISSAN DIESEL MOTOR CO LTD), 6.September 1994,

## Beschreibung

Die Erfindung betrifft einen Werkzeughalter nach dem Oberbegriff des unabhängigen Patentanspruches; ein solcher Werkzeughalter ist aus CH 682 891 A bekannt. Werkzeughalter für ein Antrieb an einer Werkzeugmaschine weisen bekanntlich einen Adapter mit einer konzentrischen Werkzeugaufnahme auf. In dieser Werkzeugaufnahme sind Spannmittel zum Einspannen eines Werkzeuges angebracht. In einer automatischen Werkzeugwechselstation ist daher für jedes einzelne Werkzeug ein Adapter vorhanden.

Neuerdings sind Antriebe bekannt geworden, welche zwei konzentrische Antriebswellen aufweisen. Sie haben eine äussere und eine innere Antriebswelle, welche abhängig oder unabhängig voneinander angetrieben sein können. Sie sind beispielsweise über ein Getriebe miteinander gekoppelt. Ein derartiger Zweiwellenantrieb ist beschreiben im SMM Nr. 20/1995, Seiten 94,95 (Ellen-Christine Reiff). Eine andere Version eines derartigen Antriebes stellt die Kopplung durch zwei hintereinander gelagerte Elektromotoren dar. Dies ist im Patent CH 682891 (Garu AG) beschrieben.

Allerdings ist bisher ein gleichzeitiges Ausnützen dieser Antriebe mit zwei konzentrischen Wellen für Werkzeugmaschinen nicht möglich.

Die Erfindung stellt sich daher die Aufgabe, einen Werkzeughalter anzugeben, welcher für einen solchen Antrieb mit zwei konzentrischen Antriebswellen geeignet ist, wobei beide Wellen gleichzeitig benützbar sein sollen.

Diese Aufgabe wird durch die in dem Anspruch 1 angegebenen Werkzeughalter gelöst.

Ein zusätzlicher Vorteil der Erfindung ist, dass mindestens zwei verschiedene Werkzeuge mit jeweils eigener geeigneter Bearbeitungsgeschwindigkeit benützt werden können.

Ein weiterer Vorteil der Erfindung besteht darin, dass bei einer Werkzeugwechselstation die Zahl der Werkzeughalter reduzierbar ist, da jeder erfindungsgemässe Werkzeughalter je mindestens zwei Werkzeuge aufnehmen kann.

Der erfindungsgemässe Werkzeughalter wird nachstehend im Zusammenhang mit den Zeichnungen beschrieben. Es zeigen:

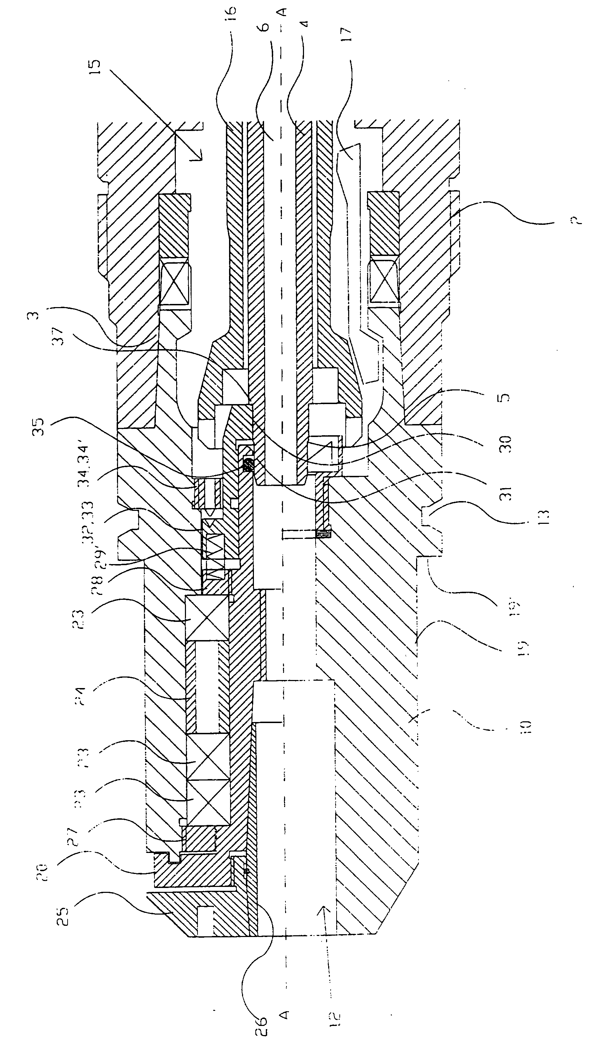

Figur 1 zeigt einen Werkzeughalter im Längsschnitt und zwar nach Stand der Technik unterhalb der Symmetrieline A - A und gemäss Erfindung oberhalb dieser Linie;

Ein Antrieb für eine Werkzeugmaschine besteht aus einer äusseren hohlen Antriebswelle 2 und einer inneren konzentrisch in der äusseren angeordneten Antriebswelle 4. Die äussere Antriebswelle 2 ist mit einer Aufnahme für einen konventionellen Werkzeughalter wie üblich ausgerüstet. Die innere Antriebswelle 2 ist konzentrisch durch die hohle äussere Antriebswelle 2 geführt. Sie kann mit einer anderen Drehzahl betrieben werden. Die innere Antriebswelle 4 kann ebenfalls eine Hohlwelle sein. Ihr Hohlraum kann dann als Zuleitung für Kühlmittel, Schmiermittel und oder Druckluft zum Werkzeug benützt werden.

Ein erster Adapter 10 üblicher Art, in der Figur 1 unterhalb der Symmetrielinie A - A dargestell, ist in die Aufnahme 3 der äusseren Antriebswelle 2 eingeführt. Er ist hier mit seinem einen Ende gehalten mittels einem herkömmlichen Spannsystem 15. Dieses Spannsystem besteht aus einem Spannstück 16, welches federbelastete Spannkeile 17 nach aussen drückt und dadurch den ersten Aufahmekonus 10 in der Aufnahme 3 verkeilt fixiert. Durch nach vorne Schieben des Spannstückes lösen sich die federbelasteten Spannkeile vom Adapter 10 und dieser kann aus der Aufnahme 3 herausgezogen werden.

Der erste Adapter 10 ist hohlzylinderartig und weist an seinem anderen Ende eine zylindrische Ausnehmung auf. Diese dient nach Stand der Technik als normale Werkzeugaufnahme 12 mit Spannmitteln zum Einspannen eines Werkzeuges. Aussenseitig ist eine Anschlussstelle 13 für eine Werkzeugwechseleinrichtung vorgesehen.

Statt für Spannmittel zum Einspannen eines Werkzeuges wird der erste Adapter 10 nun in der weise abgeändert, dass eine erste Werkzeugaufnahme aussenseitig an der zylindrischen Aufnahmefläche 19 mit einem Anschlag 19' und entsprechenden Spannmitteln, wie beispielsweise eine Ueberwurfmutter, versehen. Der Innenraum des hohlzylindrischen Adapter 10 mit der normalen Werkzeugaufnahme wird nun zur Aufnahme eines zweiten Adapter 20 benützt.

Der zweite Adapter 20,in der Figur 1 oberhalb der Symmetrielinie A - A dargestellt, befindet sich konzentrisch im ersten Adapter 10. Er ist darin und gegenüber diesem drehbar gelagert und axial fixiert. An seinem inneren Ende steht er in lösbarer Wirkverbindung mit der inneren Antriebswelle 4. An seinem äusseren Ende ist er mit einem zweiten konventionellen Spannelement 25, beispielsweise mit Spannzangen 26, zur Aufnahme eines zweiten Werkzeuges versehen.

Die Lagerung des weiten Adapter 20 im ersten Adapter 10 geschieht mittels mindestens 2 Lagern 23, welche durch eine Abstandshülse 24 in festem Abstand gehalten werden. Eine Mutter 27 mit Aussengewinde fixiert die Lagerung am vorderen Ende gegenüber dem ersten Adapter 10. Am ihrem anderen Ende ist die Lagerung mittels einer Gewindering 28 gegenüber dem zweiten Adapter 20 fixiert. Dadurch ist der innere, zweite Adapter 20 drehbar aber nicht axial verschiebbar gegenüber dem ersten Adapter 10.

Zur Wirkverbindung mit der inneren Antriebswelle 4, das heisst zum Antrieb des zweiten Adapter 20, ist dieser mittels einer geeigneten lösbaren Kupplung mit der inneren Antriebswelle verbunden. Besonders geeignet ist eine Ausgestaltung des inneren Adapter 20 mit einem Innensechskant 31, welcher auf die innere Antriebswelle 4 auf einen Aussensechskant 5 aufschiebbar ist. Zum leichteren Einfahren empfiehlt es sich, den Aussensechskant 5 am freien Ende der inneren Antriebswelle 4 etwas anzuphasen. Damit durch die zugeführtes Kühl- und Schmiermittel keine Verschmutzung des Werkzeughalters verursacht befindet sich ein oder mehrere O-Ringe als Dichtelemente im Bereich dieser Sechskant-Verbindung.

Ein besonderes Problem stellt sich durch die Notwendigkeit des Werkzeugwechsels. Dazu muss der Werkzeughalter mit beiden Adapteren 10,20 als Ganzes gewechselt werden können. Dabei müssen sowohl der Adapter 10, wie auch der Adapter 20 gleichzeitig auf beide Antriebswellen aufgeschoben werden können und automatisch in je die entsprechende Wirkverbindung mit den zugehörenden Antriebswellen 2,4 gelangen.

Dies wird gelöst, indem der innere Adapter 20 im gelösten zustand des Werkzeughalters immer in einer der Wirkverbindung entsprechenden Rotationspostition gegenüber dem Adapter 10 ist. Dazu umfasst ein Schiebestück 29 den inneren Adapter 20 auf einer beschränkten Länge an dessen inneren Ende. Dieses Schiebestück 29 kann verschiebbar um ein gewissen Mass auf dem inneren Adapter gleiten. Das Schiebestück 29 weist an einem Ende ebenfalls einen massgleichen Innensechskant 30 auf. Auch dieser wird auf die innere Antriebswelle 4 aufgeschoben. Das Schiebestück 29 überragt den inneren Adapter 20 um die Breite seines Innensechskantes. Beim Aufschieben auf die innere Antriebswelle 4 stösst er an einen auf dieser angebrachten Anschlag 37. Beim weiteren Einschieben des Werkzeughalters gleitet das Schiebestück 29 auf dem inneren Adapter 20 nach innen zurück, bis der Werkzeughalter vollständig eingeschoben und arretiert ist. Das Schiebestück 29 weist an dem seinem Innensechskant 30 gegenüberliegenden Ende einen nach aussen radial ragenden Positionierring 32 auf. Der Positionierring 32 ist mit regelmässig angeordneten axial gerichteten Positionierbohrungen 33 in Form von Sacklöchern versehen. Der Aussenkonus 10 weist einen entsprechenden radial nach innen ragenden, zweiten Positionierring 34 auf, an welchem regelmässig angeordnete federbelastete Positionierstifte 34' axial in Richtung zu den Positionierbohrungen 34 angebracht sind. Beim Lösen des Werkzeughalters rasten sie in die Positionierbohrung 33 ein. Das Schiebestück 29 gleitet durch Druck einer Feder 29' auf dem inneren Konus 20 bis die Positionierstifte 34' in die entsprechenden Positionierbohrungen 33 eingreifen. Somit befindet sich das Schiebestück im Anschlag und der innere Adapter 20 ist gegenüber dem äusseren Adapter 10 gegen verdrehen gesichert. Der Werkzeughalter kann nun von einem Greifer üblicher Art eines Werkzeugwechlers vom Antrieb weggefahren werden.

Beim Aufsetzen eines solchen Werkzeughalters geschieht das gleich in umgekehrter Reihenfolge. Dabei hat der innere Adapter 20 eine Position gegenüber dem Adapter 10, welcher ermöglicht, dass das Aufschieben auf die Antriebswellen 2,4 automatisch geschehen kann. Beim Anfahren des Werzeughalters an die Aufnahmestelle 3 der äusseren Antriebswelle 2, wird zuerst das Schiebestück 29 von der inneren Antriebswelle 4 erfasst und darauf soweit aufgeschoben, bis es am Anschlag 37 ansteht. Darauf schiebt es sich auf dem inneren Adapter gegen innen. Dadurch wird der Positionierring von den Positionierstiften 34 weggeschoben, während gleichzeitig der Adapter 20 in der bestimmten richtigen Drehposition auf die innere Welle 4 und der Adapter 10 in die Aufnahme 3 der äusseren Antriebswelle 2 aufgeschoben wird. Sobald der Werkzeughalter an den Wellen fest ist, wird er als ganzes nach herkömmlicher Art vom Spannsystem 15 gehalten. Dabei ist die äussere Welle im Wirkverbund mit dem ersten Adapter 10 und die innere Antriebswelle 4 im Wirkverbund mit dem inneren Adapter 20.

## Patentansprüche

1. Werkzeughalter (1) für ein Werkzeugantrieb, welcher eine äussere (2) und eine innere, konzentrische (4) Antriebswelle aufweist, mit einem eine erste konzentrische Werkzeugaufnahme (12) aufweisenden ersten Adapter (10), welcher mittels einem Spannsystem (15) mit einem Spannstück (16) in einer Aufnahme (3) der äusseren Antriebswelle (2) lösbar gehalten ist, **dadurch gekennzeichnet, dass** ein zweiter Adapter (20) konzentrisch in der ersten Werkzeugaufnahme (12) des ersten Adapter (10) gegenüber diesem drehbar gelagert gehalten ist und in lösbarer Wirkverbindung steht mit der inneren konzentrischen Antriebswelle (4), welche das Spannstück (16) durchdringt, wobei der zweite Adapter (20) ein zweites Spannelement (25) zur Aufnahme von Werkzeugen aufweist, und dass der erste Adapter (10) erste Spannmittel (18) für Werkzeuge aufweist.

2. Werkzeughalter nach Anspruch 1, **dadurch gekennzeichnet, dass** die ersten Spannmittel (18) eine am ersten Adapter (10) radial aussenseitig Anschlussfläche (18) zur Aufnahme eines Werkzeuges und einen Anschlag (19') dazu umfassen.

3. Werkzeughalter nach Anspruch 1, **dadurch gekennzeichnet, dass** die zweiten Spannmittel ein Spannfutter mit Spannzange (26) umfassen.

4. Werkzeughalter nach Anspruch 1, **dadurch gekennzeichnet, dass** der zweite Adapter (20) einen Innensechskant (31) zum Eingriff an einem Aussensechskant (5) an der inneren konzentrischen Welle (4) aufweist.

5. Werkzeughalter nach Anspruch 1, **dadurch gekennzeichnet, dass** Mittel zum unverdrehbar Fixieren des inneren Adapter (20) gegenüber dem äusseren Adapter (10), im vom Werkzeugantrieb gelösten Zustand des Werkzeughalters (1), vorgesehen sind.

6. Werkzeughalter nach Anspruch 5, **dadurch gekennzeichnet, dass** die Mittel zum unverdrehbar Fixieren ein federbelastetes auf dem zweiten Adapter (20) verschiebbares Schiebestück (29) und mindestens einen Positionierstift (34) am ersten Adapter (10), zum Eingriff in Positionierungslöcher (33) am Schiebestück (29), umfassen.

7. Werkzeughalter nach einem der Ansprüche 1 bis 6, **dadurch gekennzeichnet, dass** Anschlussstellen (6) für eine Werkzeugwechseleinrichtung am ersten Adapter (10) angeordnet sind.

## Claims

1. A tool holder (1) for a tool drive, said tool holder comprising an outer (2) and an inner, concentric (4) drive shaft, with a first adapter (10) which comprises a first concentric tool receiver (12) and which by way of a clamping system (15) with a clamping piece (16) is releasably held in a receiver (3) of the outer drive shaft (2), **characterised in that** a second adapter (20) concentric in the first tool receiver (12) of the first adapter (10) is held rotatably mounted with respect to this first adapter and is in releasable active connection with the inner concentric drive shaft (4) which penetrates through the clamping piece (16), wherein the second adapter (20) comprises a second clamping element (25) for receiving tools, and that the first adapter (19) comprises first clamping means for tools.

2. A tool holder according to claim 1, **characterised in that** the first clamping means comprise a receiving surface (19) radially on the outside on the first adapter, for receiving a tool, and an abutment (19') for this .

3. A tool holder according to claim 1, **characterised in that** the second clamping means comprise a clamping chuck with a clamping collet (26).

4. A tool holder according to claim 1, **characterised in that** second adapter (20) comprises a hexagon socket (31) for the engagement on a hexagon projection (5) on the inner concentric shaft (4).

5. A tool holder according to claim 1, **characterised in that** there are provided means for the unrotatable fixing of the inner adapter (20) with respect to the outer adapter (10) in the condition of the tool holder (1) released from the tool drive.

6. A tool holder according to claim 5, **characterised in that** the means for the unrotatable fixing comprise a spring-loaded slide piece (29) displaceable on the second adapter (20), and at least one positioning pin (34) on the first adapter (10) for engagement in positioning holes (33) on the slide piece (29).

7. A tool holder according to one of the claims 1 to 6, **characterised in that** connection locations (6) for a tool exchange means are arranged on the first adapter (10).

## Revendications

1. Dispositif porte-outil (1) pour un entraînement d'outillage équipé d'un arbre extérieur d'entraînement (2) et d'un arbre intérieur concentrique d'entraînement (4), comprenant un premier adaptateur (10) qui présente un premier logement concentrique d'outillage (12) et qui est retenu de manière libérable, au moyen d'un système d'ablocage (15) muni d'une pièce d'ablocage (16), dans un logement (3) de l'arbre extérieur d'entraînement (2), **caractérisé par le fait qu'**un second adaptateur (20) est retenu concentriquement dans le premier logement d'outillage (12) du premier adaptateur (10), en étant monté à rotation par rapport à ce dernier, et est en liaison opérante dissociable avec l'arbre intérieur concentrique d'entraînement (4) traversant la pièce d'ablocage (16), le second adaptateur (20) comportant un second élément d'ablocage (25) pour recevoir des outils ; et **par le fait que** le premier adaptateur (10) présente des premiers moyens d'ablocage destinés à des outils.

2. Dispositif porte-outil selon la revendication 1, **caractérisé par le fait que** les premiers moyens d'ablocage englobent une surface de rattachement (19) radialement extérieure sur le premier adaptateur (10), en vue de recevoir un outil, et une butée (19') associée à ladite surface.

3. Dispositif porte-outil selon la revendication 1, **caractérisé par le fait que** les seconds moyens d'ablocage englobent un mandrin de serrage à pince de serrage (26).

4. Dispositif porte-outil selon la revendication 1, **caractérisé par le fait que** le second adaptateur (20) présente une configuration à six pans creux (31), en vue de la venue en prise avec une configuration à six pans en relief (5) sur l'arbre intérieur concentrique (4).

5. Dispositif porte-outil selon la revendication 1, **caractérisé par le fait que** des moyens sont prévus pour le verrouillage non rotatif de l'adaptateur intérieur (20), vis-à-vis de l'adaptateur extérieur (10), à l'état dudit dispositif porte-outil (1) dissocié d'avec l'entraînement d'outillage.

6. Dispositif porte-outil selon la revendication 5, **caractérisé par le fait que** les moyens de verrouillage non rotatif comprennent une pièce coulissante (29) sollicitée élastiquement, pouvant coulisser sur le second adaptateur (20), et au moins un pointeau de positionnement (34) situé sur le premier adaptateur (10), en vue de la venue en prise dans des trous de positionnement (33) sur ladite pièce coulissante (29).

7. Dispositif porte-outil selon l'une des revendications 1 à 6, **caractérisé par le fait que** des zones de rattachement (6), affectées à un mécanisme de remplacement d'outillage, se trouvent sur le premier adaptateur (10).
